# EUROPEAN PATENT APPLICATION

(11) **EP 3 037 352 A1**
(43) Date of publication of application: **29.06.2016**
(21) Application number: 15198749.2
(22) Date of filing: 09.12.2015
(51) Int. Cl.: B64D 33/02, F02C 7/052

(54) **SYSTEM AND METHOD WITH INLET PARTICLE SEPARATOR**

(30) Priority: 22.12.2014 US 201414578659
(71) Applicant: General Electric Company, Schenectady, NY 12345 (US)
(72) Inventor: YOUNES, Firas, Lynn, MA Massachusetts 01910 (US); KOBAYASHI, Sukeyuki, Loves Park, IL Illinois 61132 (US)
(74) Representative: Williams, Andrew Richard

(57) **Abstract**

A turbine engine system includes an inlet particle separator (36) receiving an inlet fluid flow and having a clean outlet (52) for a first flow of substantially clean fluid, and a scavenge outlet (54) for a second flow of scavenge fluid. A fluid pump (64) communicates with the scavenge outlet (54). The flow of scavenge fluid through the fluid pump (64) is selectively regulated.

## Description

### BACKGROUND

Turbine engines, and particularly gas or combustion turbine engines, are rotary engines that extract energy from a flow of combusted gases passing through the engine onto a multitude of turbine blades. Gas turbine engines have been used for land and nautical locomotion and power generation, but are most commonly used for aeronautical applications such as for aircraft, including helicopters. In aircraft, gas turbine engines are used for propulsion of the aircraft. In terrestrial applications, turbine engines are often used for power generation.

Particle ingestion in gas turbine engines may adversely affect engine performance and reliability, and may also increase the frequency of repair and maintenance required for engines. Various methods are employed to facilitate reducing the number of particles that are channeled via the inlet fluid flow to the engine compressor. For example, known inlet particle separator (IPS) systems work by imparting momentum and trajectory on particles to channel such particles away from the fluid stream entering the compressor. The particles are removed by a blower that conventionally draws power from the accessory gearbox (AGB). Since the AGB draws power from the turbine, the IPS blower operates continuously at speeds relative to the engine speed.

Some other known IPS systems include a clutched blower or a variable-drive blower. The variable-drive blower has a variable output motor that drives the blower at an adjustable speed. Although such blowers may reduce horsepower extraction, these systems are heavy and complex.

### BRIEF DESCRIPTION OF THE INVENTION

In one aspect, an embodiment of the invention relates to a turbine engine system including an inlet particle separator having an inlet receiving an inlet fluid flow, a clean outlet receiving a first flow of substantially clean fluid, and a scavenge outlet receiving a second flow of scavenge fluid, a fluid pump in fluid communication with the scavenge outlet, an air flow control device regulating the flow of scavenge fluid through the fluid pump, and a controller coupled with the air flow control device for selectively adjusting the flow of scavenge fluid through the fluid pump.

In another aspect, an embodiment of the invention relates to a method for operating an inlet particle separator system having an inlet particle separator with an inlet receiving an inlet fluid flow, a clean outlet receiving a first flow of substantially clean fluid, and a scavenge outlet receiving a second flow of scavenge fluid, and a fluid pump in fluid communication with the scavenge outlet. The method comprises determining at least one operational condition and adjusting the flow of scavenge fluid through the fluid pump based on the at least one operational condition.

### BRIEF DESCRIPTION OF THE DRAWINGS

In the drawings:
FIG. 1 is a plan view of a portion of an exemplary helicopter;
FIG. 2 is an enlarged cross-sectional view of a portion of an exemplary gas turbine engine inlet that may be used with the helicopter shown in FIG. 1;
FIG. 3 is a schematic view of a portion of an IPS system from FIG. 2 according to a first embodiment of the invention;
FIG. 4 is a schematic view of a portion of an IPS system from FIG. 2 according to a second embodiment of the invention; and
FIG. 5 is a flow chart showing a method of operating an IPS system according to a third embodiment of the invention.

### DETAILED DESCRIPTION

The described embodiments of the present invention relate generally to turbine engines, and more particularly, to inlet particle separators used with turbine engines. Inlet particle separators include a fluid pump, such as a blower, that operates continuously, even in conditions in which particle separation may not be necessary, such as when particle concentration in ambient air is low. The continual operation of the blower can extract an unnecessary amount of horsepower from the engine and reduce specific fuel consumption of the engine. The embodiments of the present invention provide systems and methods for controlling the operation of an IDS blower in accordance with operational conditions, such as the amount of particles in the fluid flow or altitude. For purposes of illustration, the embodiments of the present invention will be described with respect to a gas turbine engine for an aircraft. It will be understood, however, that the embodiments of the invention are not so limited and may have general applicability in non-aircraft applications, such as other mobile applications and non-mobile industrial, commercial, and residential applications.

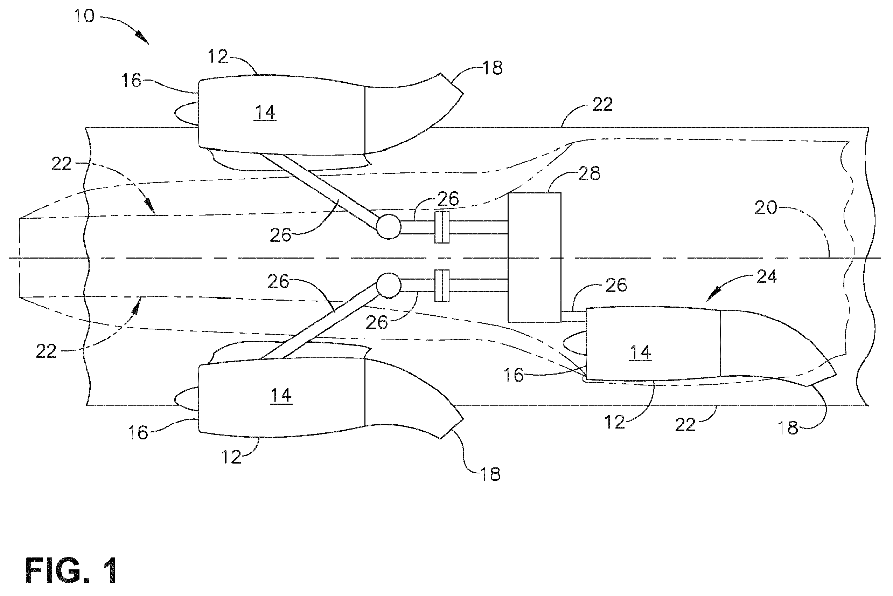

FIG. 1 is a plan view of an aircraft in the form of a helicopter 10 including gas turbine assemblies 12. In the exemplary embodiment, each gas turbine engine assembly 12 includes a gas turbine engine 14 which includes an inlet particle separator (IPS) system 16 and an exhaust 18. Two gas turbine engines 14 are oriented symmetrically with respect to an axis of symmetry 20 extending axially between the gas turbine engines 14. A third gas turbine engine 14 is oriented behind the pair of engines 14. More specifically, the pair of symmetrically oriented gas turbine engines 14 are mounted against a helicopter fuselage 22, while the third engine 14 is mounted within an engine compartment 24 defined by the fuselage 22. A drive shaft 26 extends from the front of each gas turbine engine 14 to a main transmission 28. In other designs, the drive shaft 26 may extend from other regions of engines 14.

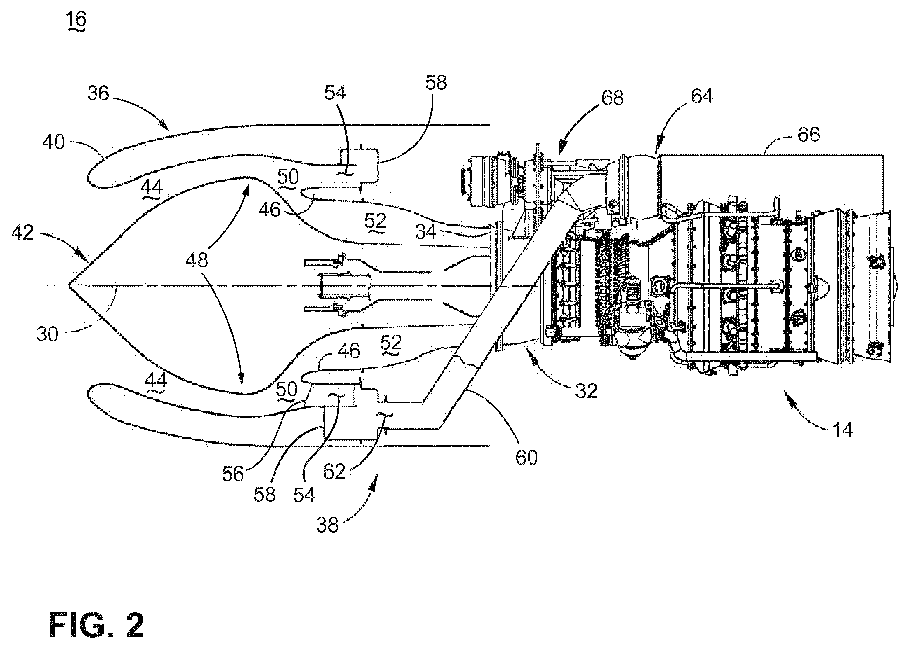

FIG. 2 is an enlarged cross-sectional view of the IPS system 16 for one of the gas turbine engines 14 from FIG. 1. The gas turbine engine 14 defines a centerline 30 and includes, among other conventional components, a compressor 32 having a compressor inlet 34. In the exemplary embodiment, the IPS system 16 can be a detachable unit that is designed to be mounted on the front end of the engine 14. More specifically, in the exemplary embodiment, IPS system 16 includes an inlet particle separator (IPS) 36 in fluid communication with the compressor 32 and a scavenge system 38. The IPS 36 is configured to separator matter, including but not limited to, sand, dust, dirt, liquids, and/or other extraneous matter not desired in the engine air flow, all of which may be referred to herein as particles, from the fluid that passes through the IPS 36 to the compressor inlet 34. It should also be appreciated that the term "fluid" as used herein includes any material or medium that flows, including but not limited to any one of, gas, air and liquids.

The IPS 36 includes a nacelle inlet 40 and a bullet nose 42 which together define an inlet in the form of an intake passageway 44 receiving an inlet fluid flow, and a flow splitter 46. The bullet nose 42 includes a frusto-conical or convex hub section 48. The diameter of the hub section 48 gradually increases in the downstream direction along the intake passageway 44. In addition, the diameter of the nacelle inlet 40 also increases somewhat in this region. The diameter of the hub section 48 continues to gradually increase until it reaches a maximum diameter, after which the hub diameter quickly drops off or decreases. The portion of the IPS 36 where the diameter is decreasing defines a separation section 50. The separation section 50 is a region in which particles in the inlet fluid physically separates from a second flow of relatively clean fluid that will eventually enter the compressor 32. Separation of particles occurs in this region because the inlet fluid has been rapidly accelerated past the point of hub maximum diameter and thereafter the fluid is forced to make a sharp turn radially inwardly to a compressor inlet 34. The intake passageway 44, flow splitter 46, and separation section 50 extend radially about the centerline 30.

The flow splitter 46 bifurcates the intake passageway 44 into a clean-fluid passage 52 and a dirty-fluid passage 54 that is radially outward of the clean-fluid passage 52. The clean-fluid passage 52 extends from the hub section 48 to the inlet 34 of the compressor 32, and defines a clean outlet which receives a flow of substantially clean fluid. The dirty-fluid passage 54 extends from the hub section 48 to the scavenge system 38, and defines a scavenge outlet receiving a flow of scavenge fluid. The clean fluid flow is considered substantially clean relative to the scavenge fluid flow in that it includes a lower concentration of particles than the scavenge fluid.

In the exemplary embodiment, the IPS scavenge system 38 includes a scroll vane 56 coupled to a first end of a scroll case 58. A scavenge duct 60 is coupled to and extends from an exit port 62 of the scroll case 58 to a fluid pump, one non-limiting example of which is a blower 64. A scavenge exhaust duct 66 is coupled to and extends away from the blower 64. The scroll vane 56 and the scroll case 58 extend radially about the centerline 30 and about a circumference defined by the intake passageway 44.

In the exemplary embodiment, blower 64 is coupled to and powered by an accessory gear box (AGB) 68 of the engine 14. The blower 64 facilitates removing particles from scavenge duct 60 through the exhaust duct 66. In alternate embodiments, the blower 64 may be any device that facilitates discharging collected particles from scavenge duct 60 through the exhaust duct 66. It should be appreciated that in other embodiments, blower 64 may be powered by any other means.

During engine operation, fluid flows into the intake passageway 44, past the hub section 48, and is divided into two fluid streams by the flow splitter 46. One of the streams, known as a dirty fluid flow, is channeled radially outwardly towards the dirty-fluid passage 54 and into the scavenge system 38, wherein the dirty fluid flow is ejected from the gas turbine engine 14. The second fluid stream, known as a clean fluid flow, is channeled radially inwardly into the clean-fluid passage 52. Many particles in the inlet fluid will not be capable of changing direction at the turn into the clean-fluid passage 52, due to the greater inertia and momentum of the particles. Consequently, most particles will continue in an axial direction and enter the dirty-fluid passage 54, thus facilitating a flow of relatively clean fluid into the compressor 32. The dirty fluid flows through the dirty-fluid passage 54 to the scroll vane 56, which channels the dirty fluid into the scroll case 58. The scroll case 58 collects particles from the dirty fluid flow and guides the particles to the scavenge duct 60 towards the blower 64, which discharges the particles out of the exhaust duct 66 into the atmosphere.

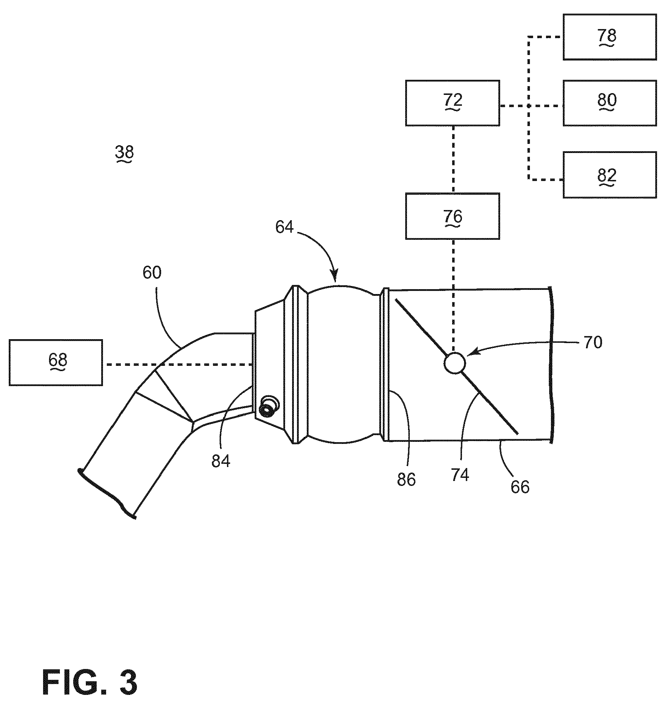

FIG. 3 is a schematic view of a portion of the IPS scavenge system 38 from FIG. 2 according to a first embodiment of the invention. The IPS scavenge system 38 can include an air flow control device 70 for regulating the flow of scavenge fluid through the blower 64. The air flow control device 70 controls the flow within a scavenge flow path of the IPS scavenge system 38, with the scavenge flow path extending to and including the scavenge outlet of the inlet particle separator, the scavenge duct 60, the blower 64, and the exhaust duct 66. The air flow control device 70 can reduce the mass flow rate through the blower 64 by selectively restricting the scavenge flow path. Since the blower 64 draws power from the AGB 68, which in turn draws power from the gas turbine engine 14, a reduced mass flow rate requires less power from the AGB 68 and reduces the horsepower drawn by the blower 64. The reduction in blower horsepower extraction results in an improved engine specific fuel consumption (SFC).

The air flow control device 70 can be provided at various locations within the scavenge flow path of the IPS scavenge system 38, including upstream or downstream of the blower 64. The air flow control device 70 can, for example, include a mechanism for constricting the flow path to or from the blower 64, obstructing a portion of the flow path to or from the blower 64, or varying the size of an orifice defining a portion of the flow path to or from the blower 64. Some non-limiting examples of the air flow control device 70 include a throttle, or a mechanism controlling the guide angle of vanes located within the inlet or outlet of the blower 64.

A controller 72 can be coupled with the air flow control device 70 for controlling the operation of the air flow control device 70 and selectively adjusting the flow of scavenge fluid through the blower 64. The controller 72 can adjust the air flow control device 70 in real time as needed to provide a flow rate through the blower 64 corresponding to a desired particle separation performance, or can have a predetermined cycle corresponding to a planned flight routine and an anticipated particle separation performance, or a combination of both.

An exemplary controller 72 for the air flow control device 70 can include a general purpose computing device in the form of a computer, including a processing unit, a system memory, and a system bus, that couples various system components, including the system memory, to the processing unit. The system memory may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to a removable optical disk such as a CD-ROM or other optical media. The drives and their associated machine-readable media provide nonvolatile storage of machine-executable instructions, data structures, program modules and other data for the computer.

In the illustrated embodiment, the air flow control device 70 is provided in the form of a throttle. The throttle 70 includes a mechanism by which the flow can be managed by a constriction or obstruction, or by varying the size of an orifice. As shown, the throttle 70 can have a body 74 that is adjusted by an electrical, hydraulic, or pneumatic actuator or positioner 76. The adjustable body 74 can be provided within the scavenge flow path of the scavenge system 38 and can be opened or closed by the positioner 76 to varying degrees in response to a control signal received from the controller 72. The adjustable body 74 can be configured to only partially close in order to prevent damage to the blower 64. The positioner 76 can be powered by an aircraft engine-powered generator, a battery, or other energy source. Some examples of a suitable throttle 70 for the IPS scavenge system 38 include, but are not limited to, a butterfly valve, a globe valve, a diaphragm valve, or other flow control device.

The throttle 70 can be adjusted automatically based on a control signal from the controller 72. The control signal may be a function of at least one input to the controller 72. The throttle 70 can be controlled to operate the blower 64 at selected flow or power settings as a function of the input. The controller 72 can receive the input for controlling the throttle 70 from various sources. The source of the controller input can, for example, be a particle sensor, an altitude sensor, or a pilot-controlled switch. The controller 72 can further be coupled with any combination of the input sources in order to receive input from multiple sources for controlling the throttle 70.

In one example, the controller 72 can receive an input signal from a particle sensor 78 coupled with the controller 72. The particle sensor 78 can detect or monitor the amount of particles in the fluid at a particular location. The particle sensor 78 can be located where fluid enters the IPS system 16 at the nacelle inlet 40 (FIG. 2) for detecting the amount of particles in the ambient air, or can be located at a point downstream where particles have been separated, for example, downstream of the blower 64. Some non-limiting examples of the particle sensor 78 include an electrostatic sensor, a photoelectric cell, or a magnetic counter.

The controller 72 can receive the input signal from the particle sensor 78, and controls the throttle 70 as a function of the input signal. For example, when little or no particles are present in the fluid, the throttle 70 can reduce fluid flow to the blower 64. When a significant amount of particles are present, the fluid flow to the blower 64 can be set to a flow rate corresponding to a desired particle separator performance.

In another example, the controller 72 can receive an input signal from an altitude sensor 80 coupled with the controller 72. The altitude sensor 80 can detect or measure the altitude of the helicopter 10. Some non-limiting examples of the altitude sensor 80 include an altimeter, GPS, a bellows, or a vacuum valve.

The controller 72 can receive the signal from the altitude sensor 80, and controls the throttle 70 as a function of the signal. For example, at high altitudes, when little or no particles are expected to be present in the fluid, the throttle 70 can reduce fluid flow to the blower 64. At lower altitudes, when a significant amount of particles are expected to be present, the fluid flow to the blower 64 can be set to a flow rate corresponding to a desired particle separator performance.

In another example, the controller 72 can receive an input signal from a pilot-controlled switch 82. The switch 82 can be controllable by the pilot of the helicopter 10 to set or adjust the fluid flow to the blower 64 to a flow rate corresponding to a desired particle separator performance. The switch 82 can be used to select a particular fluid flow rate to the blower 64. Alternatively, the switch 82 can be used to set an operational mode of the IPS system 16 having a predetermined flow rate to the blower 64. For example, the IPS system 16 can have a high separation mode in which the throttle 70 allows full flow to the blower 64 and a low separation mode in which the throttle 70 restricts flow to the blower 64. The pilot can select the high separation mode in situations calling for increased particle separation, such as on take-off or landing, and switch to low separation mode in situations not requiring as much separation, such as flying at higher altitudes or over water.

The throttle 70 can be provided at various locations within the scavenge flow path of the IPS scavenge system 38, including upstream or downstream of the blower 64. In the illustrated embodiment of FIG. 3, the blower 64 includes a blower inlet 84 in fluid communication with the scavenge duct 60 and a blower outlet 86 in fluid communication with the exhaust duct 66. The throttle 70 is located downstream of the blower outlet 86, within the exhaust duct 66.

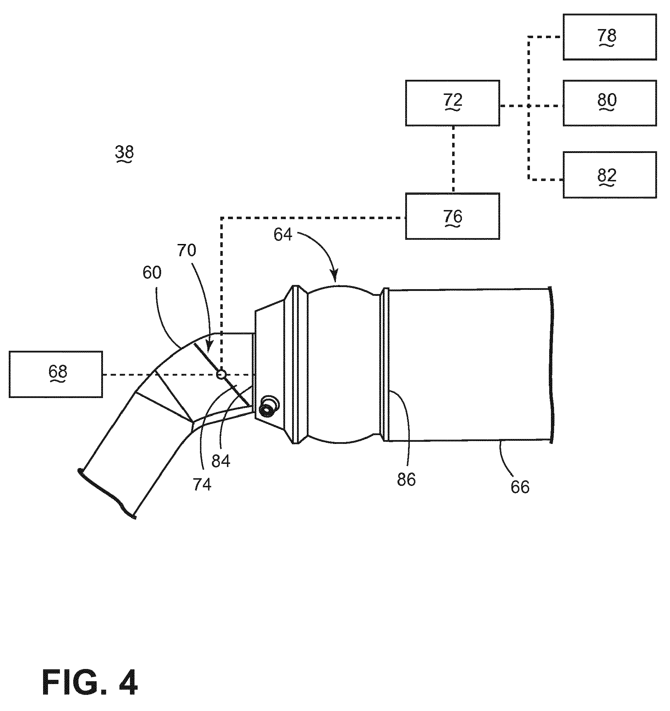

FIG. 4 is a schematic view of a portion of the IPS scavenge system 38 from FIG. 2 according to a second embodiment of the invention. In the illustrated embodiment of FIG. 4, the throttle 70 is located upstream of the blower inlet 84, within the scavenge duct 60.

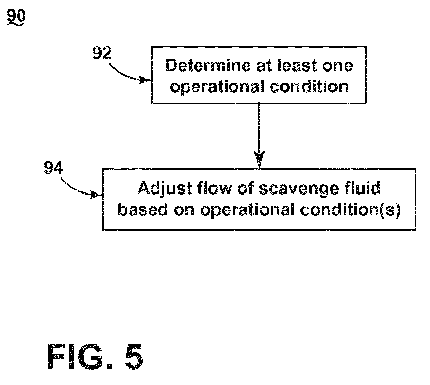

FIG. 5 is a flow chart showing a method 90 of operating the IPS system 16 according to a third embodiment of the invention. The method 90 can be used to control the operation of a fluid pump, such as blower 64, in accordance with operational conditions. In operation, the controller 72 may implement the method 90. The controller 72 may include all or a portion of one or more computer programs having executable instruction sets for control the operation of the fluid pump. The program may include a computer program product that may include machine-readable media for carrying or having machine-executable instructions or data structures stored thereon. Such machine-readable media may be any available media, which can be accessed by a general purpose or special purpose computer or other machine with a processor. Generally, such a computer program may include routines, programs, objects, components, data structures, algorithms, etc., that have the technical effect of performing particular tasks or implementing particular abstract data types. Machine-executable instructions, associated data structures, and programs represent examples of program code for executing the exchange of information as disclosed herein. Machine-executable instructions may include, for example, instructions and data, which cause a general-purpose computer, special purpose computer, or special-purpose processing machine to perform a certain function or group of functions.

At step 92, at least one operational condition is determined. Some non-limiting examples of operational conditions include an amount of particles in the inlet fluid flow, an amount of particles in the clean fluid, an amount of particles in the scavenge fluid, the altitude, or the position of the pilot-controlled switch 82. For step 92, the controller 72 may receive input from various sources, including the particle sensor 78, altitude sensor 80, the pilot-controlled switch 82, or any combination thereof in order to determine the operation condition(s). At step 94, based on the operation condition(s) determined at step 92, the flow of scavenge fluid through the blower 64 is adjusted. Adjusting the flow can include regulating the flow of scavenge fluid through the blower 64 using the air flow control device 70. The flow through the blower 64 can be reduced in certain operational conditions such as when little or no particles are detected by the particle sensor 78, at higher altitudes as determined by the altitude sensor 80, or when the pilot selects a particular flow rate or separation mode using the switch 82. Reducing the flow may entail constricting the flow path to or from the blower 64, obstructing a portion of the flow path to or from the blower 64, or varying the size of an orifice defining a portion of the flow path to or from the blower 64. In one example, the flow through the blower 64 can be throttled by adjusting the position of the body 74 with the positioner 76.

In any of the above embodiments, a fluid pump other than blower 64 can be used. For example, the fluid pump can be any device that facilitates discharging collected particles from scavenge duct 60 through the exhaust duct 66. Furthermore, embodiments of the present invention may apply to fluid pumps powered by the AGB 68 of the engine 14 or powered by other devices.

The various embodiments of systems, methods, and other devices related to the invention disclosed herein provide improved fuel consumption, particularly in a turbine engine. Technical effects of the above-described embodiments include an inlet particle separation system provided with an air flow control device in order to change the horsepower extraction of the blower by restricting or adjusting the blower flow path, therefore reducing air flow mass. A reduction in blower horsepower extraction improves engine specific fuel consumption (SFC) for accessory gearbox-driven blowers, and other blowers as well. It is known to reduce the horsepower extraction of IPS blowers by using a variable-drive blower, but these systems are heavier and do not net any gain in SFC. These systems are also relatively more complex, and may be less reliable compared to a directly-driven blower. The embodiments of the present invention utilize an air flow control device that is relatively light and simple in comparison to the variable-drive blower systems. Additionally, the air flow mass to the blower can controlled in accordance with operational conditions, such as the amount of particles in the fluid flow, the altitude of the aircraft, or the position of a pilot-controlled switch. In addition to improving SFC, a reduction in blower horsepower extraction can be advantageous when additional or emergency engine horsepower is needed; using the embodiments of the invention disclosed herein, torque can be diverted from the blower to the engine.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A turbine engine system, comprising:
an inlet particle separator (36) having an inlet (44) receiving an inlet fluid flow, a clean outlet (52) receiving a first flow of substantially clean fluid, and a scavenge outlet (54) receiving a second flow of scavenge fluid;
a fluid pump (64) in fluid communication with the scavenge outlet (54);
an air flow control device (70) regulating the flow of scavenge fluid through the fluid pump (64); and
a controller (72) coupled with the air flow control device (70) for selectively adjusting the flow of scavenge fluid through the fluid pump (64).

2. The turbine engine system of claim 1, wherein the fluid pump (64) comprises a blower.

3. The turbine engine system of claim 2, further comprising an accessory gearbox (68) coupled with the blower (64) for driving the blower (64).

4. The turbine engine system of one of claim 2 or claim 3, wherein the blower (64) comprises a blower inlet (84) in fluid communication with the scavenge outlet (54) and a blower outlet (86), and wherein the air flow control device (70) is downstream of the blower inlet (84).

5. The turbine engine system of claim 4, wherein the blower outlet (86) is in fluid communication with a duct (66), and wherein the air flow control device (70) regulates the flow of scavenge fluid through the duct (66).

6. The turbine engine system of any of claims 1-5, wherein the air flow control device (70) comprises a throttle (70).

7. The turbine engine system of claim 6, further comprising a flow path comprising at least the scavenge outlet (54) and the fluid pump (64), and wherein the throttle (70) comprises an adjustable body (74) within the flow path and a positioner (76) operably coupled with the body (74) for adjusting the orientation of the body (74) within the flow path based on a control signal from the controller (72).

8. The turbine engine system of any preceding claim, wherein the inlet particle separator (36) comprises:
a flow splitter (46) at least partially defining a clean flow path including the clean outlet (52) and a scavenge flow path including the scavenge outlet (54); and
a convex hub section (48) upstream of and adjacent the flow splitter (46) for directing particles toward the scavenge flow path.

9. The turbine engine system of claim 8, wherein the air flow control device (70) is positioned within the scavenge flow path upstream of the fluid pump (64).

10. The turbine engine system of any preceding claim, further comprising at least one of:
a particle sensor (78) coupled with the controller (72), wherein the controller (72) is configured to receive a signal from the particle sensor (78) and control the air flow control device (70) as a function of the signal;
an altitude sensor (80) coupled with the controller (72), wherein the controller (72) is configured to receive a signal from the altitude sensor (80) and control the air flow control device (70) as a function of the signal; or
a switch (82) coupled with the controller (72) for selectively controlling the air flow control device (70).

11. A method (90) for operating an inlet particle separator system (16) having an inlet particle separator (36) with an inlet (44) receiving an inlet fluid flow, a clean outlet (52) receiving a first flow of substantially clean fluid, and a scavenge outlet (54) receiving a second flow of scavenge fluid, and a fluid pump (64) in fluid communication with the scavenge outlet (54), the method (90) comprising:
determining (92) at least one operational condition; and
adjusting (94) the flow of scavenge fluid through the fluid pump (64) based on the at least one operational condition.

12. The method (90) of claim 11, wherein adjusting (94) the flow comprises throttling the flow.

13. The method (90) of claim 11, wherein adjusting (94) the flow comprises reducing the flow.

14. The method (90) of claim 13, wherein reducing the flow comprises one of: constricting a flow path to or from the fluid pump (64); obstructing a portion of a flow path to or from the fluid pump (64); or varying the size of an orifice defining a portion of a flow path to or from the fluid pump (64).

15. The method (90) of any one of claims 11 to 14, wherein determining (92) at least one operational condition comprises determining at least one of: an amount of particles in the inlet fluid flow; an amount of particles in the clean fluid; an amount of particles in the scavenge fluid; altitude; or the position of a pilot-operated switch (82).
